# EUROPÄISCHE PATENTSCHRIFT

(11) **EP 1 114 752 B1**
(45) Veröffentlichungstag und Bekanntmachung des Hinweises auf die Patenterteilung: **18.10.2006**
(21) Anmeldenummer: 00127518.9
(22) Anmeldetag: 15.12.2000
(51) Int. Cl.: B60R 16/02, H02H 5/10, G01R 31/02

(54) **Vorrichtung zur Überwachung einer Batterieleitung**
Device for monitoring a battery lead
Dispositif de surveillance de fil de batterie

(30) Priorität: 08.01.2000 DE 10000551
(43) Veröffentlichungstag der Anmeldung: 11.07.2001
(73) Patentinhaber: Bayerische Motoren Werke Aktiengesellschaft, 80809 München (DE)
(72) Erfinder: Griessbach, Robert, 83629 Weyarn (DE); Ossner, Wolf, 82178 Puchheim (DE)

(56) Entgegenhaltungen:
- EP-A- 0 728 622
- EP-A- 0 812 049
- GB-A- 191 443
- PATENT ABSTRACTS OF JAPAN Bd. 1995, Nr. 01, 28. Februar 1995 (1995-02-28) & JP 06 289094 A (HITACHI CABLE LTD), 18. Oktober 1994 (1994-10-18)
- PATENT ABSTRACTS OF JAPAN Bd. 014, Nr. 185 (P-1036), 13. April 1990 (1990-04-13) & JP 02 032273 A (MITSUBISHI RAYON ENG CO LTD; others: 01), 2. Februar 1990 (1990-02-02)
- PATENT ABSTRACTS OF JAPAN Bd. 015, Nr. 019 (P-1153), 16. Januar 1991 (1991-01-16) & JP 02 262072 A (KANSAI ELECTRIC POWER CO INC:THE; others: 01), 24. Oktober 1990 (1990-10-24)

## Beschreibung

Die Erfindung betrifft eine Vorrichtung zur Überwachung einer Batterieleitung.

Zumeist werden Batterieleitungen in Fahrzeugen zumindest zum Teil im Innenraum verlegt. Dies trifft vor allem dann zu, wenn sich die Batterie im Heck des Fahrzeugs befindet und der Anlasser bzw. Generator im vorderen Bereich angeordnet ist.

Nachteilig hierbei ist, daß es aufgrund des relativ großen Querschnitts der Batterieleitungen zu sogenannten Packageproblemen kommt. Darüber hinaus ist der Durchtritt der Leitung im Bereich der Stirnwand vom Innenraum in den Motor nur konstruktiv aufwendig zu bewerkstelligen. Als Alternative bietet es sich an, eine Batterieleitung am Fahrzeugunterboden, also an der Außenseite eines Fahrzeugs zu verlegen. Damit sind zwar die Packageprobleme im wesentlichen entschärft. Kritisch bei einer Verlegung der Batterieleitung am Fahrzeugunterboden ist allerdings, daß die Batterieleitung bei einem Aufgleiten des Fahrzeugs auf ein Hindernis verletzt werden kann. Dadurch kann es beispielsweise zu einem Kurzschluß mit dem Bodenblech kommen, bei dem eine Brandgefahr gegeben ist.

Bei einer Verlegung der Batterieleitung außerhalb des Fahrzeugs ist es daher von Vorteil, die Batterieleitung selbst diagnosefähig auszuführen. Dadurch kann eine Verletzung der Leitung oder ein Kurzschluß erkannt werden, so daß die Batterieleitung in einem kritischen Fall über eine Sicherheitsklemme von der Batterie abgeklemmt werden kann. Darüber hinaus kann beispielsweise über ein Abschalten des Motors verhindert werden, daß ein Generator weiter Strom erzeugt.

Da es sich vorliegend um ein Sicherheitssystem handelt, sollte die Batterieleitung eigendiagnosefähig sein, d.h. nicht nur ein Zustand der Fehlfunktion, sondern auch ein ordnungsgemäßer Zustand sollte aktiv detektierbar sein.

Aus dem Stand der Technik sind einige Ausführungsformen diagnosefähiger Leitungen bekannt. Beispielsweise wird bei im Telekommunikationsbereich ein Verfahren genutzt, bei dem eine Leitung von einem Schlauch umgeben ist. Der Schlauch wird mit Überdruck gefüllt. Bei einer Verletzung des Schlauchs entweicht dieser Überdruck, was als Diagnoseinformation dient. Im Fahrzeug ist dieses Verfahren aufgrund des hohen Aufwand jedoch nicht einsetzbar.

Bei einem anderen Verfahren wird der Strom der Batterieleitungen gemessen. Bei einem Überstrom wird die Leitung abgeklemmt. Problematisch hierbei ist, einerseits die Festlegung der Auslöseschwelle, weil beispielsweise bei einem schleichenden Kurzschluß schon bei relativ niedrigenden Strömen eine Brandgefahr besteht, andererseits der hohe Schaltungsaufwand.

Aus der EP 0 728 622 A2 ist eine Vorrichtung zur Detektion von Funktionsstörungen bei Stromleitungen bekannt. Dabei werden isolierte Stromleitungen von einer elektrisch leitenden Schicht umgeben, die wiederum von einer elektrischen Isolierschicht umgeben ist. Die elektrisch leitende Schicht wird auf ein bestimmtes Potential gesetzt, welches von einer Überwachungseinrichtung kontinuierlich überprüft wird. Durch eine Potentialveränderung kann auf eine Funktionsstörung, insbesondere einen Kurzschluss bei den Leitungen geschlossen werden.

Aus PATENT ABSTRACTS OF JAPAN Bd. 1995, Nr. 01, 28. Februar 1995 (1195-02-28) und JP 06 289094 A, 18. Oktober 1994 (1994-10-18) ist eine Vorrichtung zur Überwachung einer Batterieleitung mit den Merkmalen des Oberbegriffs des Anspruchs 1 bekannt.

Aus der EP-A-0 812 049 ist eine Spannungsversorgungseinrichtung für ein Kraftfahrzeug bekannt. Um ohne Sicherung auszukommen wird vorgeschlagen, die Einrichtung mit zwei Übertragungsleitungen zu versehen, die sich von einem der Pole einer im Fahrzeug mitgeführten Spannungsversorgung erstrecken. Ferner weist sie einen Relais-Schaltkreis mit zwei Eingangsklemmen und mindestens einer Ausgangsklemme auf, wobei die Eingangsklemmen jeweils mit den Übertragungsleitungen verbunden sind. Der Relais-Schaltkreis weist einen Verbindungs-Schaltkreis auf, um die zwei Eingangsklemmen und die mindestens eine Ausgangsklemme miteinander zu verbinden. Ferner ist beschrieben, zwei Auswerteelektroniken mit jeweils einem Spannungsteiler zu versehen.

Aufgabe der Erfindung ist es, eine weitere Vorrichtung zur Überwachung einer Batterieleitung anzugeben, die einfach, kostengünstig und funktionssicher aufgebaut sowie eigendiagnosefähig ist.

Diese Aufgabe wird durch die im Anspruch 1 genannten Merkmale gelöst.

Demgemäß ist ein elektrisch leitfähiger jedoch nach außen vollständig isolierter Schirm verwendet, der die Batterieleitung umgibt. An dem Schirm sind zwei Auswerteelektroniken an beiden Enden angeordnet, wobei diese Elektronik derart ausgebildet und aufeinander abgestimmt ist, daß aufgrund von Beschädigungen hervorgerufene Potentialunterschiede oder Leckströme detektierbar sind. Ein wesentlicher Gedanke bei der vorliegenden Erfindung ist, daß bei der Beschädigung einer Batterieleitung vorher der die Batterieleitung umgebende Schirm verletzt worden sein muß. Wird der Schirm mittels der Auswerteelektroniken überwacht und beispielsweise auf ein bestimmtes Potential gesetzt, so können durch Beschädigungen hervorgerufene Potentialveränderungen erfaßt werden. Alternativ können auch Leckströme gemessen werden.

Beide Auswerteelektroniken umfassen Spannungsteiler. Wenn beide Spannungsteiler den gleichen Gesamtwiderstand besitzen, ergibt sich im Normalfall, also wenn alles in Ordnung ist, ein Potential von der Hälfte der Betriebsspannung und bei einem Kurzschluß nach Plus oder nach Masse wird das Potential der Leitungen entsprechend verändert. Dies kann von den Auswerteschaltungen erfaßt und unterschieden werden. Mit einer solchen Anordnung ist somit die Eigendiagnosefähigkeit der Batterieleitung bzw. des Schirmes gegeben.

Die Auswerteschaltungen können räumlich getrennt oder in einer Zentralelektronik angeordnet sein.

Die vorliegende Erfindung wird nachfolgend anhand eines besonderen Ausführungsbeispiels und mit Bezug auf die einzige beiliegende Zeichnung näher erläutert.

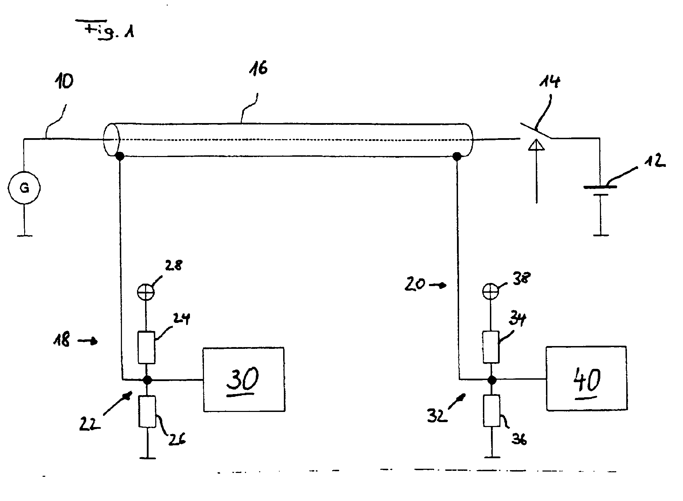

Die einzige Zeichnung zeigt ein Schaltdiagramm einer eigendiagnosefähigen Batterieleitung. Eine Batterieleitung 16 verbindet eine Fahrzeugbatterie 12 über einen Batterieschalter 14 mit einem Generator G eines Fahrzeugs. Der Batterieschalter 14 dient dazu, um im Störungsfall die Batterie 12 und die Batterieleitung 10 zu trennen.

In einer weitergebildeten Ausführungsform kann ein entsprechender Schalter vor dem Generator G angeordnet werden.

Die Batterieleitung 10 wird vorliegend über einen bestimmten Abschnitt (beispielsweise entlang des Unterbodens) von einem Schirm 16 umgeben, der elektrisch leitfähig ausgebildet und sowohl nach innen - also zur Batterieleitung hin - wie auch nach außen vollständig isoliert ausgeführt ist. An den beiden Enden des Schirms 16 sind Auswerteelektroniken 18 und 20 angeordnet. Beide Auswerteelektroniken 18 und 20 umfassen Spannungsteiler 22, 32 und Detektionseinheiten 30 und 40. Der Spannungsteiler 22 der Auswerteelektronik 18 weist einen ersten Widerstand 24 auf, der mit der Betriebsspannung 28 sowie dem weiteren Widerstand 26 verbunden ist. Der Widerstand 26 wiederum ist gegen Masse geführt. Der Widerstand 24 weist einen Widerstandswert R, der Widerstand 26 einen Widerstandswert 2R auf.

Der Spannungsteiler 32 der Auswerteelektronik 20 ist analog aufgebaut, jedoch mit dem Unterschied, daß der erste Widerstand 34, welcher mit der Betriebsspannung 38 und dem zweiten Widerstand 36 verbunden ist, einen Widerstandswert von 2R aufweist. Dagegen besitzt bei diesem Spannungsteiler 32 der zweite Widerstand 36 einen Widerstandswert R. An dem Schaltknoten der beiden Spannungsteiler 22 und 32 sind jeweils die Einheiten 30 und 40 angeschlossen, welche Potentialunterschiede detektieren können.

Im unterbrochenen Zustand des Schirms 60 stellt sich bei dem Spannungsteiler 22 ein Potential von von 2/3 der Betriebsspannung ein. Bei dem Spannungsteiler 32 hingegen stellt sich ein Potential von 1/3 der Betriebsspannung ein. Im Normalfall, also wenn der Schirm 16 - und damit wohl auch die Batterieleitung 10 - nicht beschädigt ist, ergibt sich an den beiden Einheiten 30 und 40 jeweils die Hälfte der Betriebsspannung. Dies erlaubt die Eigendiagnose des Schirms 16. Bei einem Kurzschluß gegen Plus oder Masse wird das Potentials des Schirms verändert. Was von den Auswerteeinheiten 30 und 40 erkannt und unterschieden werden kann. Die beiden Auswerteeinheiten 30, 40 können im Fahrzeug getrennt oder aber auch in einer Zentralelektronik gemeinsam untergebracht sein.

Gemäß einer anderen Alternative, die nicht in den Zeichnungen dargestellt ist, wird ein Leckstrom von der Batterieleitung zum Schirm von einer Auswerteelektronik erfaßt. Elektronikschaltungen zur Detektion von Leckströmen sind allgemein bekannt, so daß vorliegend nicht besonders darauf eingegangen wird.

Die vorliegende Erfindung stellt eine äußerst einfache jedoch wirkungsvolle Vorrichtung zur Überwachung einer Batterieleitung dar. Dabei soll das obige Ausführungsbeispiel die vorliegende Erfindung nicht einschränken.

Es können auch andere Ausführungsvarianten verwendet werden, bei denen Auswerteelektroniken aufgrund von einer Beschädigung auftretende Potentialunterschiede oder Leckströme erfassen.

## Patentansprüche

1. Vorrichtung zur Überwachung einer Batterieleitung, umfassend
einen die Batterieleitung umgebenden elektrisch leitfähigen Schirm (16), der nach außen vollständig isoliert und auf ein definiertes Potential gelegt ist,
zumindest eine Auswerteelektronik die mit dem Schirm gekoppelt ist (16), wobei die Auswerteelektronik derart ausgebildet ist, daß aufgrund von einer Beschädigung auftretende Potentialunterschiede oder Leckströme erfaßbar sind,
wobei zwei Auswerteelektroniken (18, 20) vorgesehen sind, die an den beiden Enden des Schirms (16) angeordnet sind,
**dadurch gekennzeichnet,**
**daß** beide Auswerteelektroniken (18, 20) jeweils einen Spannungsteiler (22, 32) umfassen, und
**daß** die Spannungsteiler (22, 32) derart dimensioniert sind, daß sich im unterbrochenen Zustand des Schirms (16) auf der einen Seite ein vorgegebenes Potential und auf der anderen Seite ein anderes vorgegebenes Potential einstellt.

2. Vorrichtung nach Anspruch 1,
**dadurch gekennzeichnet,**
**daß** sich auf der einen Seite ein Potential von einem Drittel der Betriebsspannung und auf der anderen Seite ein Potential von zwei Drittel der Betriebsspannung einstellt und beide Spannungsteiler (22, 32) den gleichen Gesamtwiderstand besitzen.

## Claims

1. A device for monitoring a battery lead, comprising an electrically conductive screen (16) which surrounds the lead and is completely insulated from the exterior and kept at a defined potential,
at least one evaluating unit connected to the screen (16) and constructed so that leakage currents or potential differences resulting from damage are detectable,
wherein two evaluating electronic units (18, 20) are provided, one at each end of the screen (16),
**characterised in that**
the two evaluating units (18, 20) each comprise a voltage divider (22, 32) and
the voltage dividers (22, 32) are dimensioned so that when the screen (16) is broken, a set potential occurs at one side and a different set potential occurs on the other side.

2. A device according to claim 1, **characterised in that**
the resulting potential is one-third of the operating voltage on one side and two-thirds of the operating voltage on the other side and both voltage dividers (22, 32) have the same total resistance.

## Revendications

1. Dispositif de surveillance d'un câble de batterie, comprenant :
- un blindage (16) électroconducteur, entourant le câble de batterie, entièrement isolé vers l'extérieur et mis à un potentiel défini, et
- au moins un dispositif électronique d'exploitation, couplé au blindage (16) et détectant les différences de potentiel ou courants de fuite apparaissant à la suite d'une détérioration,
deux dispositifs électroniques d'exploitation (18, 20), étant prévus au deux extrémités du blindage (16),
**caractérisé en ce que**
les deux dispositifs électroniques d'exploitation ont chacun un diviseur de tension (22, 32), et
les diviseurs de tension (22, 32) sont dimensionnés pour que si le blindage (16) est coupé, un potentiel prédéfini s'établit sur un côté et un autre potentiel prédéfini sur l'autre côté.

2. Dispositif selon la revendication 1,
**caractérisé en ce qu'**
un potentiel égal à un tiers de la tension de fonctionnement s'établit sur un côté et un potentiel égal à deux tiers de la tension de fonctionnement sur l'autre côté, et les deux diviseurs de tension (22, 32) possèdent la même résistance totale.
